# EUROPEAN PATENT SPECIFICATION

(11) **EP 3 024 305 B1**
(45) Date of publication and mention of the grant of the patent: **13.03.2019**
(21) Application number: 14194483.5
(22) Date of filing: 24.11.2014
(51) Int. Cl.: H05B 37/02, H05B 39/04, B61L 5/18

(54) **Method for locally controlling signal lamps for traffic applications and control system**
Verfahren zur dezentralen Steuerung von Signallampen für Verkehrsanwendungen und Steuersystem
Procédé destiné à réguler localement des lampes de signalisation pour des applications de trafic et système de commande

(43) Date of publication of application: 25.05.2016
(73) Proprietor: Thales Management & Services Deutschland GmbH, 71254 Ditzingen (DE)
(72) Inventor: Wingerath, Norbert, 71701 Schwieberdingen (DE); Weiss, Peter, 71686 Remseck a.N. (DE); Holder, Hartmut, 71254 Ditzingen (DE); Lostun, Virgil, 71229 Leonberg (DE); D'Alimonte, Shawn, Mississauga, Ontario L5N 1L3 (CA)
(74) Representative: Kohler Schmid Möbus Patentanwälte

(56) References cited:
- WO-A2-2008/109715
- US-A- 3 885 197
- US-A- 6 031 749
- US-A1- 2005 062 436

## Description

### Background of the invention

The invention concerns a method and a control system for locally controlling at least two signal lamps for traffic applications.

It is known to control signal lamps by means of an interlocking station. Yet, the control has to be carried out via long and for installation expensive cabling with a high voltage that has to be adjusted manually via bulky transformers near the lamps. Further the transformation of the voltage is involved with additional effort.

Control installations located near the signal lamps allow using low DC voltage and a central voltage adjustment. The currents of the signal lamps are measured and the supply voltage is adjusted collectively for all signal lamps. As a result the emission of the different signal lamps may be different, depending on the specific environmental conditions, different parameters of different signal lamps or degradation of connections (corrosion of cables and clamps etc.). In particular when using low voltage these differences (in e.g. temperature, degree of degradation of connections) may result in great differences of lamp brightness which may lead to a declined visibility of the signals or, in case the correction current value is adapted such that the signal lamp having the lowest actual rms current value complies with the desired current value, durability of the other signal lamps is reduced due to the increased current which the lamps are exposed to.

Prior art document US 3,885,197 discloses a method and a system for controlling a plurality of signal lamps for traffic applications. A method for locally controlling a system comprising different lamps is known from prior art document US 6,031,749, which discloses adjusting, for each of the different lamps, the lamp current based on a comparison of a measured rms lamp current and a desired rms current.

### Object of the invention

It is therefore an object of the invention to provide a method and a system for controlling signal lamps by low voltage signals, wherein degradation of single signal lamps do not lead to declined visibility of the signals and at the same time durability of the signal lamps is enhanced.

### Description of the invention

This object is solved by the method according to claim 1.

According to the invention steps a) through f) of this method are carried out for each signal lamp separately, wherein for each signal lamp individual correction values are evaluated. For each signal lamp a pulse width modulated signal (PWM-signal) is generated according to the desired rms current values independently of the adjustment of the current values of the other signal lamps, and the polarity of the PWM-signal is modulated.

By adjusting the current to a specific rms current value for each signal lamp independently of the desired rms-values and the actual rms values of the other signal lamps, a uniform brightness for all signal lamps can be achieved. It is also possible to realize different predetermined brightness values for different signal lamps, if desired. Thus, a dedicated brightness can be achieved for each single signal lamp. No trade-off concerning the lamp brightness has to be made. The current can be adapted to different lamps reacting differently e.g. to environmental influences like cabling parameters. Thus, each lamp can be operated with an optimized rms current value. According to the invention AC current signals are generated by modulating the polarity of the PWM-signals, thereby preventing material migration within the lamp filament and thus further enhancing the durability of the lamp. The polarity is preferably changed every 10 ms so as to imitate 50 Hz AC. For generating the PWM signals it is preferred to use a programmable logic device, in particular a FPGA (field programmable gate array).

It is highly preferred to carry out the method continuously in order to obtain safe information about the status of each signal lamp output at any time.

The term "local control" means that the signal lamps are not controlled by the remote interlocking but by means of a control circuit which is located near the signal lamps, in particular at a distance in the range of up to about 100 m to the signal lamps. Due to a local control the signal lamps can be operated with low voltage (e.g. 12 V). No transformation of the voltage for current transport reason is required.

The terms "rms current value" and "rms voltage value" describe the root mean square current and voltage values measured over a multitude of pulses.

According to the invention the polarity of the PWM-signal is modulated by means of a transistor bridge comprising at least four transistors in order to modulate the polarity of the PWM-signal, wherein two of the transistors are controlled by a first central processing unit and the other transistors are controlled by a second central processing unit. The usage of a transistor bridge with at least four transistors, which are controlled by two different central processing units (CPUs) enables simulating an AC current signal which complies with a high safety level.

The transistors of the transistor bridge are electrically connected such that the adjustment of step d) can only be applied to a specific signal lamp in case both central processing units evaluated the same correction current value for said specific signal lamp. Therefore, the current path of the PWM-signal always comprises one transistor controlled by the first CPU and one transistor controlled by the second CPU. Both transistors have to be switched to forward direction. Thus SIL4 safety for railway applications level can be realized.

In order to provide signal lamps with equal brightness, the desired values can be chosen equal for all signal lamps.

In a highly preferred variant the adjustment of the current is not carried out abruptly but within a predetermined adjustment time window, in particular within 5 - 300ms, preferably within 10 - 15 ms. I.e. in case of a current increase, in particular if a lamp is switched on, the current is gradually increased to avoid a high inrush current (soft start). Thereby the durability of the lamps is further enhanced.

In particular it is advantageous if a short-circuit-monitoring is carried out during the adjustment time window. In case of a short circuit the short circuit can be detected during the current increase (current ramp) and the signal lamp can be switched off early before damage occurs due to an overcurrent.

The invention also concerns the control system according to claim 5 for carrying out a method as described before, the system comprising at least two control circuits, each control circuit controlling one signal lamp, wherein the control circuits comprise: two central processing units, two programmable logic devices having a PWM control for generating a PWM-signal, and a power control device, the power control device comprising a transistor bridge with at least four transistors in order to modulate the polarity of the PWM-signal, wherein two of the transistors are controlled by a first central processing unit and the other transistors are controlled by a second central processing unit. The control system is preferably connected to an interlocking e.g. via a CAN-network.

In order to minimize hardware costs it is preferred that at least two of the control circuits, preferably all control circuits of the control system, share the same central processing units and/or the same programmable logic devices.

In case a two-filament signal lamp should be used it is advantageous if the transistor bridge comprises at least six transistors, wherein three of the transistors are controlled by the first central processing unit and the other transistors are controlled by the second central processing unit. Two of the transistors are then part of the current paths for both filaments.

Further advantages can be extracted from the description and the enclosed drawings.

The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- FIG. 1: shows a simplified control system with two control circuits.
- FIG. 2: shows a control circuit with a two-filament signal lamp for an inventive control system.

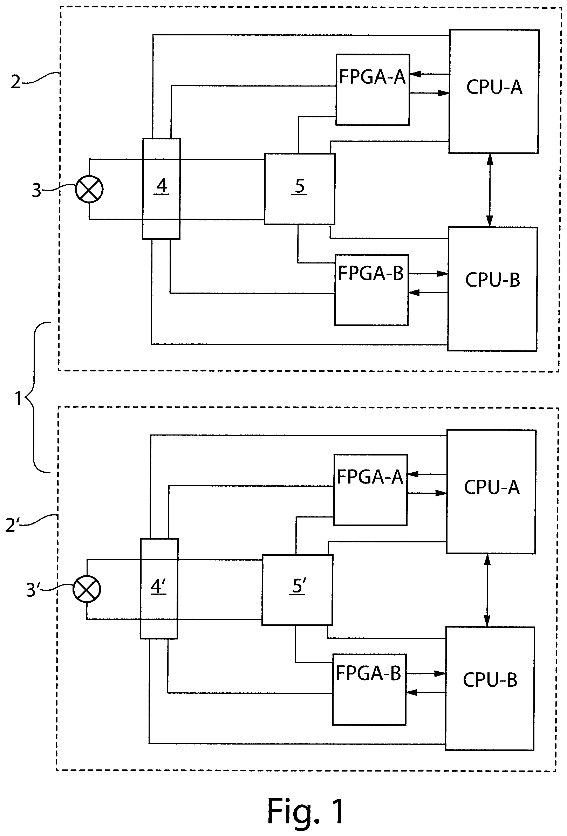

**FIG. 1** shows a control system **1** with two control circuits **2, 2',** wherein each control circuit 2, 2' controls one signal lamp **3, 3'** (here one-filament signal lamps). A lamp measure unit **4, 4'** measures the actual rms current value of signal lamp 3, 3' and, optionally, the actual rms voltage value of signal lamp 3, 3'. The measured actual rms current value and, optionally, the actual rms voltage value are sent to two independent central processing units **CPU-A, CPU-B.** Both central processing units CPU-A, CPU-B comprise a memory where a desired rms current value for the respective signal lamp 3, 3' is stored. Each central processing unit CPU-A, CPU-B compares the measured actual rms current value with the desired rms current value and evaluates a correction current value. The central processing units CPU-A, CPU-B compare the correction current values. In case the correction values are consistent, each central processing unit CPU-A, CPU-B instruct a programmable logic device FPGS-A, FPGA-B to modulate the pulse width of a PWM control signal to reach the desired rms values accordingly. Therefore each programmable logic device FPGS-A, FPGA-B generates the PWM control signal which is sent to a power control device 5, 5'. The power control device 5, 5' switches the PWM signal to the signal lamp.

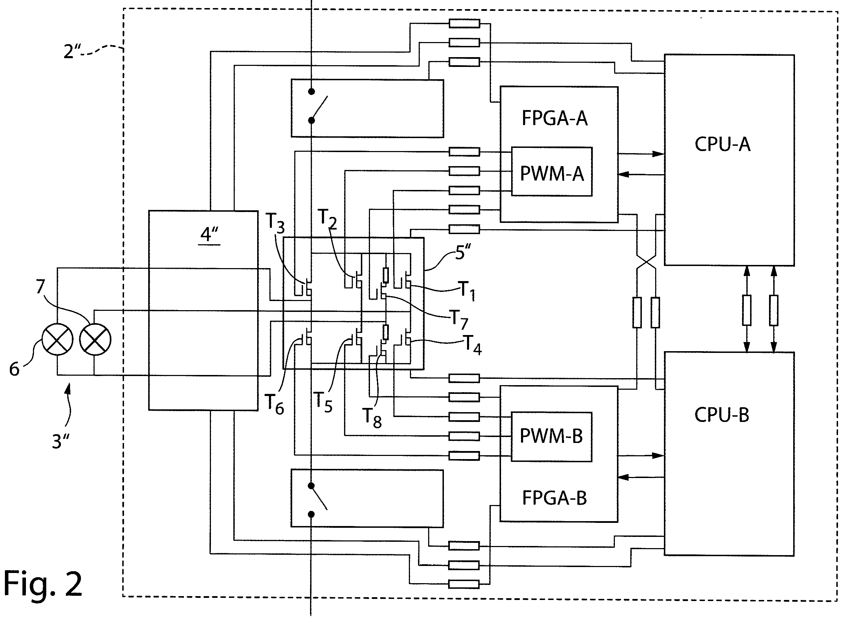

By measuring the voltage value besides the current value the central processing units CPU-A, CPU-B can compare if the current/voltage is inside a predefined window and so detect short circuits or lamps with broken filaments and also malfunctions in the transistor bridge or its control circuitry. **FIG. 2** shows a control circuit **2"** with a signal lamp **3"** comprising two filaments **6, 7** for an inventive control system, wherein the second filament 7 is used as reserve in case of a failure of the first filament 6. A lamp measure unit **4"** measures rms current and voltage values in both filaments 6, 7 of lamp 3" which are sent to the central processing units CPU-A, CPU-B. In accordance with the description above, PWM signals are generated (here for both filaments 6, 7) by means of the programmable logic devices FPGA-A, FPGA-B. A power control device **5"** comprises a transistor bridge with transistors **T1, T2, T3, T4, T5, T6,** wherein transistors T1, T2, T3 are controlled by the central processing unit CPU-A and the transistors T4, T5, T6 are controlled by the central processing unit CPU-B. The transistors T1, T2, T3, T4, T5, T6 are electrically connected such, that the PWM signal is only transferred in case both central processing units CPU-A, CPU-B evaluated the same correction current value for said specific signal lamp and both programmable logic devices FPGA-A, FPGA-B generate the same PWM signals for said specific signal lamp. By means of the transistor bridge the polarity of the current can be switched, thereby generating AC current. In case of a one-filament-signal lamp the transistors T3, T6 can be omitted.

Additional transistor **T7, T8** are provided for carrying out a cold filament test in order to detect fault filaments even if they are not operated.

By measuring the current in both filaments of the lamp also short circuits between different lamps or their wiring can be detected. Therefore the current flow is enabled on one side only of the transistor bridge of another lamp and thus an electrical connection between both lamps can be detected.

According to the invention the rms current value can be continuously adjusted for each cabling resistance by varying the duty cycle of a PWM signal. Thereby the invention realizes a safe control of signal incandescent lamps operated with low voltage in a short distance from the signal while the durability (life-time) of signal lamps can be increased, thereby decreasing maintenance costs. Since the desired rms values can be defined by the user, the same control system can be used for various types of signal lamps.

## Claims

1. Method for controlling at least two signal lamps (3, 3', 3") for traffic applications,
**characterized in**
**that** each of the at least two signal lamps (3, 3', 3") is locally controlled by means of a control circuit (2, 2', 2") comprising at least a first central processing unit (CPU-A) and a second central processing unit (CPU-B), and in that the method comprises carrying out the following steps for each signal lamp (3, 3', 3"):
a) defining a desired rms current value for a current through the respective signal lamp (3, 3', 3");
b) measuring an actual rms current value of the current through the same signal lamp (3, 3', 3");
c) sending the measured actual rms current value to each of the two independent central processing units (CPU-A, CPU-B);
d) comparing, by means of each central processing unit (CPU-A, CPU-B), the respective actual rms current value with the desired rms current value and evaluating a correction current value;
e) comparing, by means of the central processing units (CPU-A, CPU-B), the evaluated correction current values; and
f) in case both central processing units (CPU-A, CPU-B) evaluated the same correction current value, adjusting the current to the desired rms current value by means of the control circuit (2, 2', 2"), wherein the control circuit (2, 2', 2") is powered by a constant voltage source,
wherein the adjustment comprises generating for the same signal lamp (3, 3', 3") a pulse width modulated PWM-signal according to the desired rms current value independently of the adjustment of the current values of the other signal lamps (3, 3', 3") and wherein an AC current signal is generated by modulating the polarity of the PWM-signal by means of four transistors of a transistor bridge (T1, T2, T3, T4, T5, T6), wherein two of the transistors (T1, T2, T3) are controlled by the first central processing unit (CPU-A) and the other two transistors (T4, T5, T6) are controlled by the second central processing unit (CPU-B).

2. Method according to any one of the preceding claims, **characterized in that** the desired values are equal for all signal lamps (3, 3', 3").

3. Method according to any one of the preceding claims, **characterized in that** in case of adjusting the current to higher values, the adjustment of the current is carried out gradually within a predetermined adjustment time window, in particular within 5 - 300ms, preferably within 10 - 15 ms.

4. Method according to claim 3, **characterized in that** a short-circuit monitoring is carried out during the adjustment time window.

5. Control system for controlling at least two signal lamps (3, 3', 3") for traffic applications, **characterized in that** the control system is adapted to carry out a method according to any one of the claim 1 through 4,
the system comprising at least two of the said control circuits (2, 2', 2"), each control circuit (2, 2', 2") controlling a separate signal lamp (3, 3', 3"), wherein each control circuit (2, 2', 2") comprises:
a lamp measure unit (4, 4', 4") for measuring the actual rms current value of the current through the signal lamp (3, 3', 3") of the respective control circuit (2, 2', 2"),
two programmable logic devices (FPGA-A, FPGA-B), each having a PWM
control (PWM-A, PWM-B) for generating the PWM-signal, the said first central processing unit (CPU-A) and the second central processing unit (CPU-B), and
a power control device (5, 5', 5"), the power control device (5, 5, 5") comprising the said transistor bridge.

6. Control system according to claim 5 **characterized in that** at least two of the control circuits (2, 2', 2") share the same central processing units (CPU-A, CPU-B) and/or the same programmable logic devices (FPGA-A, FPGA-B).

7. Control system according to claim 5 or 6 **characterized in that** the lamp is a two filament lamp and the transistor bridge comprises at least six transistors (T1, T2, T3, T4, T5, T6), wherein three of the transistors (T1, T2, T3) are controlled by the first central processing unit (CPU-A) and the other three transistors (T4, T5, T6) are controlled by the second central processing unit (CPU-B), wherein two of the transistors are part of current paths for both filaments.

## Patentansprüche

1. Verfahren zum Steuern von mindestens zwei Signallampen (3, 3', 3") für Verkehrsanwendungen,
**dadurch gekennzeichnet,**
**dass** jede der mindestens zwei Signallampen (3, 3', 3") dezentral mittels einer Steuerschaltung (2, 2', 2") gesteuert wird, die mindestens eine erste zentrale Verarbeitungseinheit (CPU-A) und eine zweite zentrale Verarbeitungseinheit (CPU-B) aufweist, und dass das Verfahren das Ausführen der folgenden Schritte für jede Signallampe (3, 3', 3") aufweist:
a) Definieren eines Soll-Effektivstromwerts für einen Strom durch die jeweilige Signallampe (3, 3', 3");
b) Messen eines tatsächlichen Effektivstromwerts des Stroms durch dieselbe Signallampe (3, 3', 3");
c) Senden des gemessenen tatsächlichen Effektivstromwerts an jede der beiden unabhängigen zentralen Verarbeitungseinheiten (CPU-A, CPU-B);
d) Vergleichen des jeweiligen tatsächlichen Effektivstromwerts mit dem Soll-Effektivstromwert mittels jeder zentralen Verarbeitungseinheit (CPU-A, CPU-B) und Ermitteln eines Korrekturstromwerts;
e) Vergleichen der ermittelten Korrekturstromwerte mittels der zentralen Verarbeitungseinheiten (CPU-A, CPU-B); und
f) falls beide zentrale Verarbeitungseinheiten (CPU-A, CPU-B) denselben Korrekturstromwert ermittelt haben, Anpassen des Stroms auf den Soll-Effektivstromwert mittels der Steuerschaltung (2, 2', 2"), wobei die Steuerschaltung (2, 2', 2") von einer Konstantspannungsquelle versorgt wird,
wobei die Anpassung für dieselbe Signallampe (3, 3', 3") umfasst: Erzeugen eines pulsbreitenmodulierten PWM-Signals entsprechend des Soll-Effektivstromwerts unabhängig von der Anpassung der Stromwerte der anderen Signallampen (3, 3', 3") und wobei ein Wechselstromsignal erzeugt wird durch Modulieren der Polarität des PWM-Signals mittels vier Transistoren einer Transistorbrücke (T1, T2, T3, T4, T5, T6), wobei zwei der Transistoren (T1, T2, T3) von der ersten zentralen Verarbeitungseinheit (CPU-A) und die anderen zwei Transistoren (T4, T5, T6) von der zweiten zentralen Verarbeitungseinheit (CPU-B) gesteuert werden.

2. Verfahren nach einem der vorhergehenden Ansprüche, **dadurch gekennzeichnet, dass** die Sollwerte für alle Signallampen (3, 3', 3") gleich sind.

3. Verfahren nach einem der vorhergehenden Ansprüche, **dadurch gekennzeichnet, dass**, falls der Strom auf höhere Werte angepasst wird, die Anpassung des Stroms allmählich innerhalb eines vorbestimmten Anpasszeitfensters ausgeführt wird, insbesondere innerhalb von 5 - 300 ms, vorzugsweise innerhalb von 10 - 15 ms.

4. Verfahren nach Anspruch 3, **dadurch gekennzeichnet, dass** während des Anpasszeitfensters eine Kurzschlussüberwachung ausgeführt wird.

5. Steuersystem zum Steuern von mindestens zwei Signallampen (3, 3', 3") für Verkehrsanwendungen,
**dadurch gekennzeichnet,**
**dass** das Steuersystem dazu eingerichtet ist, ein Verfahren nach einem der Ansprüche 1 bis 4 auszuführen,
wobei des System mindestens zwei der genannten Steuerschaltungen (2, 2', 2") aufweist, wobei jede Steuerschaltung (2, 2', 2") eine separate Signallampe (3, 3', 3") steuert, wobei jede Steuerschaltung (2, 2', 2") aufweist:
eine Lampenmesseinheit (4, 4', 4") zum Messen des tatsächlichen Effektivstromwerts des Stroms durch die Signallampe (3, 3', 3") der jeweiligen Steuerschaltung (2, 2', 2"),
zwei programmierbare Logikschaltungen (FPGA-A, FPGA-B), die jeweils eine PWM-Steuerung (PWM-A, PWM-B) zum Erzeugen des PWM-Signals umfassen,
die genannte erste zentrale Verarbeitungseinheit (CPU-A) und die zweite zentrale Verarbeitungseinheit (CPU-B),
eine Leistungssteuerungsvorrichtung (5, 5', 5"), wobei die Leistungssteuerungsvorrichtung (5, 5', 5") die genannte Transistorbrücke aufweist.

6. Steuersystem nach Anspruch 5, **dadurch gekennzeichnet, dass** mindestens zwei der Steuerschaltungen (2, 2', 2") sich dieselben zentralen Verarbeitungseinheiten (CPU-A, CPU-B) und/oder dieselben programmierbare Logikschaltungen (FPGA-A, FPGA-B) teilen.

7. Steuersystem nach Anspruch 5 oder 6, **dadurch gekennzeichnet, dass** die Lampe eine Doppelfilamentlampe ist und die Transistorbrücke mindestens sechs Transistoren (T1, T2, T3, T4, T5, T6) aufweist, wobei drei der Transistoren (T1, T2, T3) von der ersten zentralen Verarbeitungseinheit (CPU-A) gesteuert werden und die anderen drei Transistoren (T4, T5, T6) von der zweiten zentralen Verarbeitungseinheit (CPU-B) gesteuert werden, wobei zwei der Transistoren Teil der Strompfade für beide Filamente sind.

## Revendications

1. Procédé pour commander au moins deux feux de signalisation (3, 3', 3") pour des applications de circulation, **caractérisé en ce que** :
chacun des au moins deux feux de signalisation (3, 3', 3") est commandé localement au moyen d'un circuit de commande (2, 2', 2") qui comprend au moins une première unité centrale de traitement (CPU-A) et une seconde unité centrale de traitement (CPU-B), et **en ce que** le procédé comprend la mise en oeuvre des étapes qui suivent pour chaque feu de signalisation (3, 3', 3") :
a) la définition d'une valeur de courant quadratique moyenne rms souhaitée pour un courant qui traverse le feu de signalisation respectif (3, 3', 3") ;
b) la mesure d'une valeur de courant rms réelle du courant qui traverse le même feu de signalisation (3, 3', 3") ;
c) l'envoi de la valeur de courant rms réelle mesurée sur chacune des deux unités centrales de traitement indépendantes (CPU-A, CPU-B) ;
d) la comparaison, au moyen de chaque unité centrale de traitement (CPU-A, CPU-B), de la valeur de courant rms réelle respective avec la valeur de courant rms souhaitée et l'évaluation d'une valeur de courant de correction ;
e) la comparaison, au moyen des unités centrales de traitement (CPU-A, CPU-B), des valeurs de courant de correction évaluées ; et f) dans le cas où les deux unités centrales de traitement (CPU-A, CPU-B) ont évalué la même valeur de courant de correction, le réglage du courant à la valeur de courant rms souhaitée au moyen du circuit de commande (2, 2', 2"), dans lequel le circuit de commande (2, 2', 2") est alimenté par une source de tension constante ; dans lequel :
le réglage comprend la génération, pour le même feu de signalisation (3, 3', 3"), d'un signal modulé en largeur d'impulsion PWM conformément à la valeur de courant rms souhaitée indépendamment du réglage des valeurs de courant des autres feux de signalisation (3, 3', 3") ; et dans lequel :
un signal de courant alternatif AC est généré en modulant la polarité du signal PWM au moyen de quatre transistors d'un pont de transistors (T1, T2, T3, T4, T5, T6), dans lequel deux des transistors (T1, T2, T3) sont commandés par la première unité centrale de traitement (CPU-A) et les deux autres transistors (T4, T5, T6) sont commandés par la seconde unité centrale de traitement (CPU-B).

2. Procédé selon la revendication 1, **caractérisé en ce que** les valeurs souhaitées sont égales pour tous les feux de signalisation (3, 3', 3").

3. Procédé selon l'une quelconque des revendications précédentes, **caractérisé en ce que**, dans le cas du réglage du courant à des valeurs plus élevées, le réglage du courant est mis en oeuvre de façon progressive à l'intérieur d'une fenêtre temporelle de réglage prédéterminée, en particulier à l'intérieur de 5 - 300 ms, de préférence à l'intérieur de 10 - 15 ms.

4. Procédé selon la revendication 3, **caractérisé en ce qu'**une surveillance de court-circuit est mise en oeuvre pendant la fenêtre temporelle de réglage.

5. Système de commande pour commander au moins deux feux de signalisation (3, 3', 3") pour des applications de circulation, **caractérisé en ce que** le système de commande est adapté pour mettre en oeuvre un procédé selon l'une quelconque des revendications 1 à 4, le système comprenant au moins deux desdits circuits de commande (2, 2', 2"), chaque circuit de commande (2, 2', 2") commandant un feu de signalisation séparé (3, 3', 3"), dans lequel chaque circuit de commande (2, 2', 2") comprend :
une unité de mesure de feu (4, 4', 4") pour mesurer la valeur de courant rms réelle du courant qui traverse le feu de signalisation (3, 3', 3") du circuit de commande respectif (2, 2', 2") ;
deux dispositifs logiques programmables (FPGA-A, FPGA-B), chacun disposant d'une commande de PWM (PWM-A, PMW-B) pour générer le signal PWM ;
ladite première unité centrale de traitement (CPU-A) et ladite seconde unité centrale de traitement (CPU-B) ;
un dispositif de commande de puissance (5, 5', 5"), le dispositif de commande de puissance (5, 5', 5") comprenant ledit pont de transistors.

6. Système de commande selon la revendication 5, **caractérisé en ce qu'**au moins deux des circuits de commande (2, 2', 2") partagent les mêmes unités centrales de traitement (CPU-A, CPU-B) et/ou les mêmes dispositifs logiques programmables (FPGA-A, FPGA-B).

7. Système de commande selon la revendication 5 ou 6, **caractérisé en ce que** le feu est un feu à deux filaments et le pont de transistors comprend au moins six transistors (T1, T2, T3, T4, T5, T 6), dans lequel trois des transistors (T1, T2, T3) sont commandés par la première unité centrale de traitement (CPU-A) et les trois autres transistors (T4, T5, T6) sont commandés par la seconde unité centrale de traitement (CPU-B), dans lequel deux des transistors constituent une partie de voies de courant pour les deux filaments.
